# EUROPÄISCHE PATENTSCHRIFT

(11) **EP 1 527 507 B1**
(45) Veröffentlichungstag und Bekanntmachung des Hinweises auf die Patenterteilung: **07.09.2016**
(21) Anmeldenummer: 03790656.7
(22) Anmeldetag: 30.07.2003
(51) Int. Cl.: H02K 15/02, H02K 1/12

(54) **STREIFENFÖRMIGE LAMELLE SOWIE STÄNDERBLECHPAKET FüR EINE ELEKTRISCHE MASCHINE**
STRIP-TYPE SEGMENT AND LAMINATED STATOR CORE FOR AN ELECTRICAL MACHINE
SEGMENT EN BANDE ET PAQUET DE TOLES STATORIQUE POUR UNE MACHINE ELECTRIQUE

(30) Priorität: 30.07.2002 DE 10234610
(43) Veröffentlichungstag der Anmeldung: 04.05.2005
(73) Patentinhaber: ROBERT BOSCH GMBH, 70442 Stuttgart (DE)
(72) Erfinder: PFLUEGER, Klaus, 71735 Eberdingen (DE); HENNE, Martin, 71696 Moeglingen (DE); BERGER, Thomas, 71254 Ditzingen (DE); RAU, Eberhard, 70825 Korntal-Muenchingen (DE); HARRER, Wolfgang, 70839 Gerlingen (DE)
(86) Internationale Anmeldenummer: PCT/DE2003/002558
(87) Internationale Veröffentlichungsnummer: WO 2004/021547

(56) Entgegenhaltungen:
- EP-A- 1 109 286
- DE-A- 2 629 532
- PATENT ABSTRACTS OF JAPAN vol. 1998, no. 03, 27. Februar 1998 (1998-02-27) -& JP 09 308143 A (MATSUSHITA ELECTRIC IND CO LTD), 28. November 1997 (1997-11-28)
- PATENT ABSTRACTS OF JAPAN vol. 2000, no. 04, 31. August 2000 (2000-08-31) -& JP 2000 023397 A (SHIBAURA MECHATRONICS CORP), 21. Januar 2000 (2000-01-21)
- PATENT ABSTRACTS OF JAPAN vol. 1998, no. 06, 30. April 1998 (1998-04-30) -& JP 10 052006 A (MITSUI HIGH TEC INC), 20. Februar 1998 (1998-02-20)

## Beschreibung

### Stand der Technik

Die Erfindung betrifft eine streifenförmige Lamelle für einen Ständer einer elektrischen Maschine sowie ein Ständerblechpaket aus solchen streifenförmigen Lamellen. Aus der deutschen Offenlegungsschrift DE-OS 26 295 32 ist bereits ein Ständer für eine elektrische Maschine bekannt, der aus einem zunächst in flacher Form vorliegendem Eisenpaket hergestellt ist. Dazu werden streifenförmige mit Nuten versehene Lamellen so angeordnet, dass diese ein flaches Lamellenpaket bilden. Dabei sind alle Nuten der einzelnen Lamellen in die gleiche Richtung orientiert, sodass sich insgesamt eine kammartige Anordnung dieses Pakets ergibt. Dieses flache Paket wird nachfolgend Flachpaket genannt. Dieses Flachpaket wird gemäß dieser Offenlegungsschrift in einem weiteren Schritt so rund gebogen, dass sich ein wie übliche ringförmige Ständerblechpakete verwendbares Ständerblechpaket ergibt. Dort ist bereits beschrieben, dass nach dem Rundbiegen des flachen Pakets die beiden sich nun gegenüber stehenden Enden der Lamellen ein geringer Abstand trennt. Um diese beiden Enden miteinander zu fügen, ist vorgesehen diese mit einem Auftragsmetall durch Schweißen miteinander zu verbinden. Diese Ausführung hat zweierlei Nachteile. Zunächst muss zusätzlich ein Auftragsmetall aufgebracht werden, das einerseits Kosten verursacht, und andererseits einen hohen Energieaufwand erfordert, um einerseits dieses aufzuschmelzen und andererseits, um dieses Auftragsmetall mit dem beiden Enden zu verbinden. Ein weiterer Nachteil besteht darin, dass dieses Auftragsmetall einen verhältnismäßig großen nichtlaminierten Querschnitt in axialer Richtung des Ständers erzeugt. Dies erhöht aufgrund erhöhter Wirbelströme in Querschnitt des Ständers die entsprechenden Wirbelstromverluste. Des Weiteren wird durch das Auftragsschweißen verhältnismäßig viel Energie in den Ständer eingebracht. Des Weiteren führt der im Stand der Technik erwähnte Spalt zwischen den beiden Enden zu einem schlechteren Wirkungsgrad an dieser Stelle.

Aus der europäischen Offenlegungsschrift EP 1 109 286 A2 ist ein Verfahren zur Herstellung eines Ständerblechpakets einer elektrische Maschine aus streifenförmigen Lamellen mit einem geraden Jochbereich und mit diesem Jochbereich einstückig verbundenen Zähnen und mit je einer Endkontur bekannt. Vor dem eigentlichen Rundbiegen wird der jeweils erste Zahn durch plastisches Biegen des Jochbereichs in eine spezielle Stellung gebracht. Dieses Dokument zeigt eine Lamelle gemäß der Präambel des Anspruchs 1.

### Vorteile der Erfindung

Die erfindungsgemäße streifenförmige Lamelle für einen Ständer einer elektrischen Maschine mit den Merkmalen des Hauptanspruchs hat den Vorteil, dass die veränderte Endkontur einen durch eine Biegung bedingten Längenunterschied der Lamelle ausgleicht, sodass zwischen den beiden Enden nach den Rundbiegen kein Abstand mehr zwischen den beiden Stirnflächen oder Enden vorhanden ist. Die beiden Enden lassen sich dann auch ohne Auftragsschweißen verbinden. Dies hat den Vorteil, dass kein weiteres Material ausgeschmolzen werden muss. Der Energieeintrag ist geringer und es kann ein Schweißverfahren eingesetzt werden, das besonders wirtschaftlich ist. Hier eignet sich beispielsweise das Laserschweißverfahren.

Weist die Lamelle einen Jochbereich mit einer neutralen Biegelinie auf, wobei der Jochbereich an der von den Zähnen abgewandten Seite jenseits der neutralen Biegelinie länger als die neutrale Linie ist, so lässt sich die Forderung nach einem Fügevorgang an den beiden Enden ohne Zwischenraum an der Außenseite des Ständers verwirklichten. Der Außenumfang des Ständers ist rund und geschlossen und lässt sich mittels des bereits erwähnten Laserschweißverfahrens verbinden.

Darüber hinaus ist vorgesehen, dass im Jochbereich zwischen der neutralen Biegelinie und der den Zähnen zugewandten Seite des Jochs der Jochbereich kürzer als die Biegelinie ist. Durch diese Maßnahme wird insgesamt ein Zwischenraum zwischen der Außenseite des Jochs und der Innenseite des Jochs bzw. den beiden Enden vermieden.

Des Weiteren ist ein Ständerblechpaket für eine elektrische Maschine vorgesehen, wobei das Ständerblechpaket aus Lamellen gemäß einem der vorhergehenden Ansprüche hergestellt ist. Ein solches Ständerblechpaket weist eine besonders gute Rundheit auf und lässt sich damit in rund ausgedrehten Lagerschilden besonders einfach einfügen.

### Zeichnung

In den Zeichnungen sind Ausführungsbeispiele einer erfindungsgemäßen streifenförmigen Lamelle, ein Ständerblechpaket sowie eine entsprechende elektrische Maschine dargestellt. Es zeigen:
Figur 1 eine streifenförmige Lamelle für einen Ständer in einer Seitenansicht,
Figur 2 ausschnittweise den Endbereich einer streifenförmigen Lamelle in einem zweiten Ausführungsbeispiel, welches nicht beansprucht ist,
Figur 3 zeigt ebenfalls den Endbereich einer streifenförmigen Lamelle in einem dritten Ausführungsbeispiel, welches nicht beansprucht ist,
Figur 4 zeigt ausschnittweise einen Ständer aus erfindungsgemäßen streifenförmigen Lamellen,
Figur 5 zeigt in symbolischer Darstellung eine elektrische Maschine mit einem aus erfindungsgemäßen streifenförmigen Lamellen hergestellten Ständer,
Figur 6 zeigt eine streifenförmige Lamelle nach dem Stand der Technik,
Figur 7 ausschnittweise die Fügestelle vor dem Schweißen nach dem Stand der Technik,

### Beschreibung der Ausführungsbeispiele

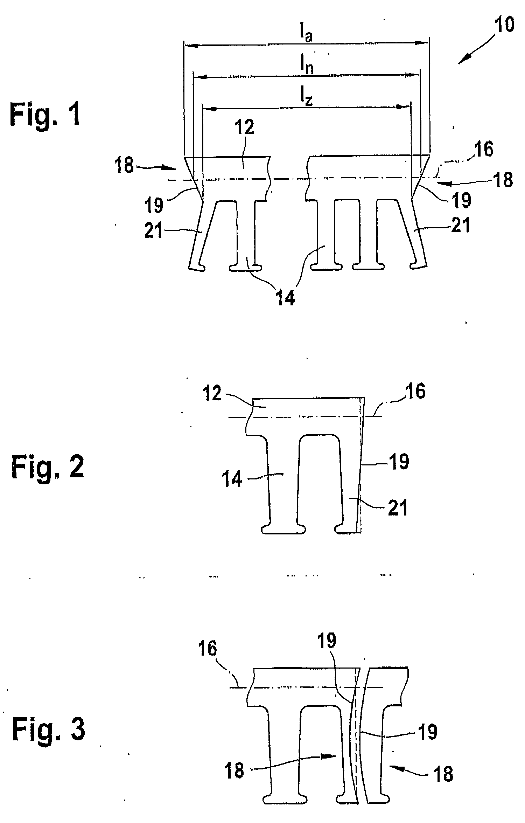

In Figur 1 ist eine erfindungsgemäße streifenförmige Lamelle 10 dargestellt. Die Lamelle 10 besteht aus einem Jochbereich 12 und mit diesem Jochbereich 12 einstückig verbundenen Zähnen 14. Die Zähne 14 und der Jochbereich 12 liegen in einer gemeinsamen Ebene. Die Lamelle 10 ist wie im eingangs beschriebenen Stand der Technik dazu vorgesehen, in der Ebene gebogen zu werden. Der Jochbereich 12 nimmt dabei die Form eines Kreisrings ein, wie dies von aus ringförmigen Lamellen hergestellten Ständern bekannt ist. Bei dieser vorgesehenen Biegung in der Ebene des Jochbereichs 12 und der Zähne 14 sind die Zähne 14 nach radial innen gerichtet. Innerhalb des Jochbereichs 12 ergibt sich bei der Biegung eine üblicher Weise "neutrale Faser" genannte Biegelinie, die sich in etwa in der Mitte des Jochbereichs 12 ergibt und hier neutrale Biegelinie 16 genannt wird. Diese neutrale Biegelinie entspricht der Zone bzw. der Linie in einem zu biegenden Werkstoff oder einem gebogenen Werkstoff in dem weder Zug- und Druckspannung herrschen.

Die Lamelle 10 hat je zwei Enden 18 mit je einer Endkontur 19, die sich über den Jochbereich 12 und je einen Endzahn 21 erstreckt. Beide Endzähne 21 sind so ausgeführt, dass sie zusammen einen Zahn bilden, der in seiner Wirkung einem ganzen Zahn 14 entspricht. Ein Teil der Endkontur 19 begrenzt die beiden Endzähne 21. Dieser Teil der Endkontur 19 ist nicht senkrecht zur neutralen Biegelinie 16 gerichtet; vielmehr bildet dieser Teil der Endkontur 19 mit der Biegelinie 16 einen Winkel, der größer als 90° ist. Im Gegensatz zu den Zähnen 14 stehen damit beide Endzähne 21 leicht abgespreizt vom Jochbereich 12 ab. Die Nuten zwischen je einem Endzahn 21 und je einem benachbarten Zahn 14 sind größer als die Nuten zwischen je zwei unmittelbar benachbarten Zähnen 14.

Im gestreckten ursprünglichen Zustand der streifenförmigen Lamelle sind am Jochbereich 12 zumindest drei verschiedene Maße entnehmbar. An der von den Zähnen 14 abgewandten Seite des Jochbereichs 12, d. h. am späteren Außenumfang des Ständers kann das Maß lₐ entnommen werden. Im Bereich der neutralen Biegelinie 16, d. h. in etwa in der Mitte des Jochbereichs 12 kann die Länge lₙ der neutralen Biegelinie 16 ermittelt werden. Des Weiteren kann am späterem Innenumfang des Jochbereichs 12, d. h. genau an der Stelle, an der die Zähne 14 in den Jochbereich 12 übergehen, gemessen werden. Diese Länge hat die Bezeichnung l_{z}.

Für die Längen lₐ, lₙ und l_{z} gelten unter der Bedingung, wonach durch die Endkontur 19 ein durch eine Biegung bedingter Längenunterschied an der Lamelle 10 ausgleichbar ist, folgende Bedingungen:
Die Länge lₐ muss größer als die Linie lₙ der neutralen Biegelinie 16 sein. Damit weist die Lamelle 10 einen Jochbereich 12 mit einer neutralen Biegelinie 16 auf, der an der von den Zähnen 14 abgewandten Seite des Jochbereichs 12 jenseits der neutralen Biegelinie 16 länger als die neutrale Biegelinie 16 ist.

Eine weitere gewünschte Bedingung besteht darin, dass l_{z} kleiner als lₙ ist. Diese Formulierung ist gleichbedeutend mit der Bedingung, dass die Lamelle 10 einen Jochbereich 12 mit einer neutralen Biegelinie 16 aufweist, wobei der Jochbereich an der den Zähnen 14 zugewandten Seite jenseits der neutralen Biegelinie 16 kürzer als die neutrale Biegelinie 16 ist. Die Endzähne 21 bilden ebenfalls mit einer Seite einen Teil der Endkontur 19. In der Darstellung gemäß Figur 1 ist vorgesehen, dass beide Endkonturen 19 mit den Endzähnen 21 eine konkave Endkontur 19 bilden. Im Beispiel nach Figur 1 ist dargestellt, dass der Übergang der Endkontur zwischen dem Jochbereich 12 und dem Endzahn 21 nicht geglättet sondern mit einer Spitze verläuft.

In Figur 2 ist ein Ausführungsbeispiel dargestellt, welches nicht beansprucht ist. Es ist eine Variante einer Endkontur 19 dargestellt. Im Unterschied zum Ausführungsbeispiel nach Figur 1 verläuft die Endkontur 19 im Ausführungsbeispiel nach Figur 2 ohne Knick, sodass zwar die formelmäßigen Zusammenhänge bezüglich lₐ, lₙ und l_{z} weiterhin Gültigkeit haben, aber die Endkontur 19 im wesentlichen gerade verläuft und somit der Endzahn 21 etwas schmaler ausgeführt ist als in Figur 1. Die in Figur 2 dargestellte Strichlinie zeigt die Kontur 19 nach dem Stand der Technik.

In Figur 3 ist ein weiteres Ausführungsbeispiel für eine Lamelle 10 dargestellt, welches nicht beansprucht ist. Es sind dabei die beiden Endkonturen 19 der Lamelle 10 einander gegenüber gestellt. Die Zusammenwirkung wird dabei verdeutlicht. Die Lamelle 10 hat hier an einem Ende 18 eine konkave Endkontur 19 und an ihrem anderen Ende eine konvexe Endkontur 19. Beide Endkonturen 19 sind wiederum so gestaltet, dass ein durch eine Biegung bedingter Längenunterschied an der Lamelle ausgleichbar ist. Darüber hinaus führt die Ausbildung der beiden Enden mit konkaver bzw. konvexer Form dazu, dass ein gewisser Formschluss ermöglicht ist.

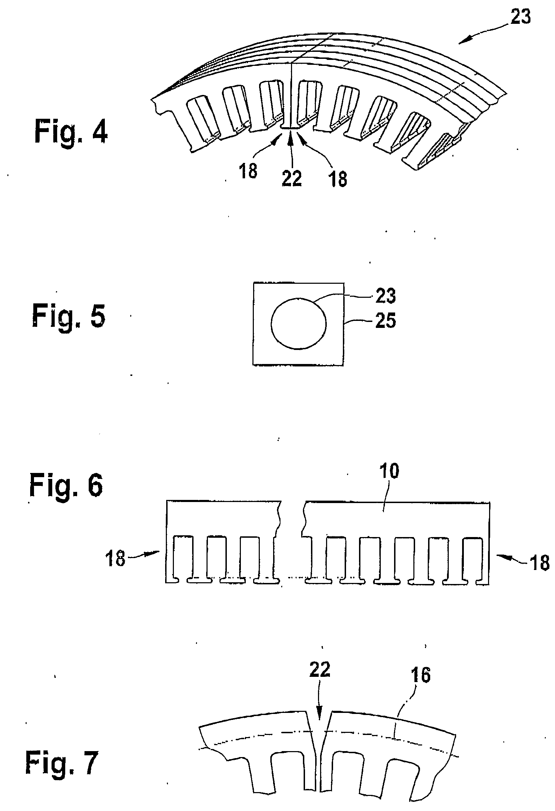

In Figur 4 ist ein Ständerblechpaket 23 dargestellt. Insbesondre ist hier die Fügestelle 22 dargestellt, an der die Enden 18 der Lamellen 10 miteinander gefügt sind. Das Ständerblechpaket 23 besteht aus einer bestimmten Anzahl zunächst streifenförmiger Lamellen 10, die wie im Stand der Technik zu einem runden Ständereisen derart gebogen sind, dass die Zähne 14 radial nach innen zeigen. Die Lamellen 10 des Ständerblechpakets 23 sind gemäß einem der zuvor beschriebenen Ausführungsbeispiele für die streifenförmigen Lamellen 10 hergestellt.

In Figur 5 ist eine elektrische Maschine 25 mit einem Ständerblechpaket 23 gemäß Figur 4 dargestellt. Diese Darstellung ist symbolisch. Das Ständerblechpaket 23 trägt eine nicht dargestellte Wicklung und bildet mit dieser zusammen einen Ständer, der für eine Wechselwirkung mit einem nicht dargestellten Rotor vorgesehen ist. Es ist vorgesehen, die Wicklung im gestreckten, flachen Zustand des Lamellenpakets in die Nuten zwischen den Zähnen 14 und Endzähnen 21 einzubringen. Des Weiteren eignet sich ein solchermaßen hergestelltes Ständerblechpaket auch für Wicklungen, die durch die bekannte Einziehtechnik in die Nuten eingebracht werden.

Figur 6 zeigt eine aus dem Stand der Technik bekannte herkömmliche Streifenlamelle 10, bei der die Enden 18 nicht derartig ausgeformt sind, dass sie die durch eine Biegung bedingten Längenunterschiede an der Lamelle 10 ausgleichen.

In Figur 7 ist die Auswirkung des Rundbiegens solcher herkömmlicher streifenförmigen Lamellen 10 dargestellt. Es wird deutlich, dass an der Fügestelle 22 ein Spalt am Umfang des Ständereisens 23 entsteht.

## Patentansprüche

1. Streifenförmige Lamelle für ein Ständerblechpaket einer elektrische Maschine, mit einem geraden Jochbereich (12) und mit diesem Jochbereich (12) einstückig verbundenen Zähnen (14), wobei der Jochbereich (12) an der von den Zähnen (14) abgewandten Seite des Jochbereichs (12) eine Länge (la) hat, der Jochbereich (12) eine neutrale Biegelinie (16) hat, die eine Länge (ln) aufweist, und der Jochbereich an einer den Zähnen zugewandten Seite jenseits der neutralen Biegelinie (16) eine Länge (lz) aufweist, mit je einer Endkontur (19) und je einem durch die Endkontur (19) begrenzten Endzahn (21) an je einem Streifenende (18), wobei beide Endzähne (21) so ausgeführt sind, dass sie zusammen einen Zahn des Ständerblechpakets bilden, **dadurch gekennzeichnet, dass** die Länge (la) an der von den Zähnen (14) abgewandten Seite des Jochbereichs (12) größer als die Länge (In) der neutralen Biegelinie (16) ist und die Länge (lz) an einer den Zähnen (14) zugewandten Seite jenseits der neutralen Biegelinie (16) kürzer ist als die neutrale Biegelinie (16) ist und, dass dadurch durch die Endkontur (19) ein durch eine Biegung bedingter Längenunterschied an der Lamelle (10) ausgeglichen wird, wobei jede Endkontur (19) mit einem Endzahn (21) eine konkave Endkontur (19) bildet.

2. Streifenförmige Lamelle nach Anspruch 1, **dadurch gekennzeichnet, dass** Nuten zwischen je einem Endzahn (21) und je einem benachbarten Zahn (14) größer sind als Nuten zwischen je zwei unmittelbar benachbarten Zähnen (14).

3. Ständerblechpaket für eine elektrische Maschine, **dadurch gekennzeichnet, dass** dieses aus Lamellen (10) nach dem vorhergehenden Anspruch hergestellt ist.

4. Elektrische Maschine mit einem Ständerblechpaket nach Anspruch 3.

## Claims

1. Strip-like lamination for a stator laminated core of an electrical machine, having a straight yoke region (12) and teeth (14) which are integrally connected to this yoke region (12), wherein the yoke region (12) has a length (la) on that side of the yoke region (12) which is averted from the teeth (12), the yoke region (12) has a neutral bending line (16) which has a length (ln), and the yoke region has a length (lz) on a side, which faces the teeth, on the far side of the neutral bending line (16), in each case having an end contour (19) and in each case having an end tooth (21), which is delimited by the end contour (19), at a strip end (18) in each case, wherein the two end teeth (21) are designed such that, together, they form a tooth of the stator laminated core, **characterized in that** the length (la) on that side of the yoke region (12) which is averted from the teeth (14) is greater than the length (ln) of the neutral bending line (16), and the length (lz) on a side, which faces the teeth (14), on the far side of the neutral bending line (16) is shorter than the neutral bending line (16), and **in that** as a result a difference in length, due to a bend, at the lamination (10) is compensated for by the end contour (19), wherein each end contour (19) together with an end tooth (21) forms a concave end contour (19).

2. Strip-like lamination according to Claim 1, **characterized in that** slots between in each case one end tooth (21) and in each case one adjacent tooth (14) are larger than slots between in each case two immediately adjacent teeth (14).

3. Stator laminated core for an electrical machine, **characterized in that** the said stator laminated core is produced from laminations (10) according to the preceding claim.

4. Electrical machine having a stator laminated core according to Claim 3.

## Revendications

1. Lamelle en forme de bande pour un paquet de tôles statoriques d'une machine électrique, comprenant une région de culasse droite (12) et des dents (14) connectées d'une seule pièce à cette région de culasse (12), la région de culasse (12) présentant une longueur (la) du côté de la région de culasse (12) opposée aux dents (12), la région de culasse (12) présentant une ligne de courbure neutre (16) qui présente une longueur (ln) et la région de culasse présentant au niveau d'un côté tourné vers les dents, au-delà de la ligne de courbure neutre (16), une longueur (lz) ayant à chaque fois un contour d'extrémité (19) et à chaque fois une dent d'extrémité (21) limitée par le contour d'extrémité (19) au niveau de chaque extrémité de bande (18), les deux dents d'extrémité (21) étant réalisées de telle sorte qu'elles forment une dent du paquet de tôles statoriques, **caractérisée en ce que** la longueur (la) au niveau du côté de la région de culasse (12) opposé aux dents (14) est supérieure à la longueur (ln) de la ligne de courbure neutre (16) et la longueur (lz) au niveau d'un côté tourné vers les dents (14) au-delà de la ligne de courbure neutre (16) est plus courte que la ligne de courbure neutre (16) et **en ce que** de ce fait, par le contour d'extrémité (19), une différence de longueur provoquée par une flexion au niveau de la lamelle (10) est compensée, chaque contour d'extrémité (19) formant avec une dent d'extrémité (21) un contour d'extrémité concave (19).

2. Lamelle en forme de bande selon la revendication 1, **caractérisée en ce que** des rainures entre chaque dent d'extrémité (21) et une dent adjacente respective (14) sont plus grandes que des rainures entre deux dents directement adjacentes (14).

3. Paquet de tôles statoriques pour une machine électrique, **caractérisé en ce qu'**il est fabriqué à partir de lamelles (10) selon la revendication précédente.

4. Machine électrique comprenant un paquet de tôles statoriques selon la revendication 3.
